# EUROPÄISCHE PATENTSCHRIFT

(11) **EP 3 003 677 B1**
(45) Veröffentlichungstag und Bekanntmachung des Hinweises auf die Patenterteilung: **15.05.2019**
(21) Anmeldenummer: 14736267.7
(22) Anmeldetag: 20.05.2014
(51) Int. Cl.: B29C 45/14, B32B 15/08, B32B 38/00

(54) **VERFAHREN ZUR HERSTELLUNG EINES BASISMATERIALES ZUR FORMUNG VON BÖRDELKAPPEN UND HIERAUS HERGESTELLTE BÖRDELKAPPE**
METHOD FOR PRODUCING A BASE MATERIAL FOR MOULDING FLANGED CAPS AND FLANGED CAPS PRODUCED THEREFROM
PROCÉDÉ DE PRODUCTION D'UN MATÉRIAU DE BASE SERVANT À FORMER DES CAPSULES À SERTIR ET CAPSULE À SERTIR FABRIQUÉE À PARTIR DE CE MATÉRIAU

(30) Priorität: 31.05.2013 DE 102013009162
(43) Veröffentlichungstag der Anmeldung: 13.04.2016
(73) Patentinhaber: Aluminium Féron GmbH & Co. KG, 52355 Düren (DE)
(72) Erfinder: BREUER, Manfred, 50129 Bergheim (DE); FÉRON, Berthold, 52372 Kreuzau (DE)
(74) Vertreter: Hauck Patentanwaltspartnerschaft mbB
(86) Internationale Anmeldenummer: PCT/DE2014/000260
(87) Internationale Veröffentlichungsnummer: WO 2014/190959

(56) Entgegenhaltungen:
- EP-A1- 1 010 519
- EP-A1- 1 186 961
- EP-A2- 1 060 875
- EP-A2- 1 094 430
- DE-A1-102010 038 031
- Letter: "Letters to the Editor Silver-Containing Polymers", , 1. Januar 1999 (1999-01-01), Seiten 2819-2821, XP055136702, Gefunden im Internet: URL:http://www.ncbi.nlm.nih.gov/pmc/articl es/PMC89571/pdf/ac002819.pdf [gefunden am 2014-08-27]

## Beschreibung

Die vorliegende Erfindung betrifft ein Verfahren zur Herstellung einer Bördelkappe für Behältnisse zur Aufnahme von pharmazeutischen Substanzen, insbesondere Ampullen.

Ein derartiges Verfahren ist aus der DE 10 2010 038 031 A1 bekannt. Bei dem bekannten Verfahren wird eine Metallfolie, insbesondere Aluminiumfolie, mit einer Kunststofffolie kaschiert. Aus dem auf diese Weise hergestellten Verbundmaterial werden dann durch Ausstanzen und Tiefziehen entsprechende Bördelkappen hergestellt.

Es ist ferner bekannt, zur Herstellung von derartigen Bördelkappen Metallfolien mit einer Lackschicht zu versehen und hieraus die Bördelkappen durch Ausstanzen und Tiefziehen zu formen. Bei den auf diese Weise hergestellten Bördelkappen besteht jedoch die Gefahr der Absonderung von Lackpartikeln, die beim Handhaben einer Bördelkappe auftreten kann. Diese Gefahr einer Absonderung von Partikeln ist hierbei in praktisch allen Stationen der Handhabung gegeben, insbesondere beim Herstellen, beim Transport, beim Waschen, beim Sterilisieren und/oder beim Aufbringen der Bördelkappe auf ein entsprechendes Behältnis. Um dies zu vermeiden, hat man gemäß der vorstehend genannten Veröffentlichung die Metallfolie anstelle einer Lackschicht mit einer Kunststofffolie versehen, bei der eine derartige Partikelabsonderung nicht auftritt.

Um der Bördelkappe eine gewünschte Farbgebung, Musterung o. dgl. zu verleihen, hat man zwischen der Kunststofflage und der Metallfolie eine Lackschicht angeordnet. Durch die aufgebrachte Kunststofffolie wird hierbei eine Partikelabsonderung von der Lackschicht verhindert. Nach dem Tiefziehen eines derartigen Materiales zur Formung der Bördelkappe besteht jedoch an der seitlich offenen Schnittkante immer noch die Gefahr, dass hier eine Partikelabsonderung aus der Lackschicht auftritt.

Bei einer anderen Vorgehensweise, um der Bördelkappe eine gewünschte Farbgebung, Musterung o. dgl. zu verleihen, verwendet man einen eine Farbwirkung hervorrufenden, durch die Kunststofflage hindurch sichtbaren Kaschierkleber. Hierbei kommen Spezialkleber zum Einsatz, deren Herstellung und Bereitstellung entsprechend aufwendig ist.

Aus der EP 1 060 875 A2 ist eine sterilisierbare Verbundfolie bekannt, die zur Erzeugung von Beutelverpackungen u.dgl. dient. Diese sterilisierbare Verbundfolie enthält eine wasserdampf- und gasundurchlässige Sperrschicht aus einer Metallfolie und auf beiden Seiten der Sperrschicht wenigstens je eine funktionelle Schicht. Diese funktionelle Schicht ist als Kunststoff-Schicht ausgebildet.

Aus der Veröffentlichung "Letter to the Editor Silver-Containing Polymers", 1. Januar 1999, Seiten 2819-2821 sind Silber enthaltende Polymere bekannt, die auf diese Weise antibakterielle Eigenschaften besitzen.

Aus der EP 1 094 430 A2 sind ein mehrteiliges Etikett für Durchdrückpackungen, seine Herstellung und Verwendung bekannt. Bei der Durchdrückpackung handelt es sich hierbei um ein tiefgezogenes Gebilde, auf dem ein entsprechendes Etikett fixiert wird.

Der vorliegenden Erfindung liegt die Aufgabe zugrunde, ein Verfahren zur Herstellung einer Bördelkappe zur Verfügung zu stellen, mit dem sich auf besonders einfache Weise ohne zusätzliche Maßnahmen und ohne Partikelabsonderung mit einer Kennzeichnung versehene Bördelkappen herstellen lassen.

Diese Aufgabe wird erfindungsgemäß bei einer ersten Ausführungsform durch die Merkmale von Patentanspruch 1 gelöst.

Erfindungsgemäß wird ein Basismaterial zur Formung von Bördelkappen zur Verfügung gestellt, das bereits mit einer Kennzeichnung versehen ist. Diese Kennzeichnung wird durch Bedruckung der Kunststofffolie vorgesehen, wobei die Kunststofffolie so auf die Metallfolie kaschiert wird, dass die Bedruckung als Konterdruck auf der zur Metallfolie benachbarten Seite der Kunststofffolie angeordnet wird. Als Kunststofffolie kommt daher ein mehr oder weniger transparentes Material zur Anwendung, damit die Bedruckung von außen erkennbar ist.

Eine Lackierung mit den damit verbundenen Nachteilen findet daher bei dem erfindungsgemäßen Verfahren keine Anwendung. Ferner wird auch kein spezieller, eine Farbwirkung erzeugender Kaschierkleber eingesetzt, so dass das erfindungsgemäße Verfahren einfach und kostengünstig durchgeführt werden kann.

Eine Lackierung mit den damit verbundenen Nachteilen findet daher bei dem erfindungsgemäßen Verfahren keine Anwendung. Ferner wird auch kein spezieller, eine Farbwirkung erzeugender Kaschierkleber eingesetzt, so dass das erfindungsgemäße Verfahren einfach und kostengünstig durchgeführt werden kann.

Bei dem erfindungsgemäßen Verfahren wird die Kunststofffolie vor der Bedruckung einer Vorbehandlung zur Haftungsverbesserung der Bedruckung unterzogen. Bei einer solchen Vorbehandlung kann es sich beispielsweise um eine Korona-Vorbehandlung, eine Fluoridierung oder eine pyrolytische Vorbehandlung handeln.

Aus dem auf diese Weise hergestellten Basismaterial werden durch Ausstanzen und Tiefziehen entsprechende Bördelkappen gefertigt. Diese Bördelkappen besitzen eine seitlich offene Schnittkante, die jedoch unproblematisch ist, da hier keine Gefahr einer Partikelabsonderung besteht.

Mit dem erfindungsgemäßen Verfahren lassen sich Bördelkappen mit beliebigen Kennzeichnungen versehen, wie beispielsweise einer Farbgebung, einer speziellen Musterung, anderen individuellen Merkmalen etc. Derartige Kennzeichnungen können insbesondere dazu dienen, die Bördelkappen, die entsprechenden Behältnisse und/oder deren Inhalt mit fälschungssicheren Merkmalen zu versehen. Diese Problematik gewinnt immer mehr an Bedeutung. Des Weiteren können durch derartige Kennzeichnungen, beispielsweise eine einfache unterschiedliche Farbgebung, entsprechende pharmazeutische Substanzen leicht voneinander unterscheidbar gemacht werden.

Speziell wird bei dem erfindungsgemäßen Verfahren im Coil-Coating-Verfahren ein Metallband mit einer Kunststofffolie beschichtet. Als Metallfolie findet insbesondere eine Aluminiumfolie, speziell ein Aluminiumband, Verwendung. Insbesondere wird dabei ein Aluminiumband der 8..., 3... oder 5... Legierungsreihe mit angepassten Glühzuständen in einem Dickenbereich von 100 bis 300 µm, vorzugsweise 150-220 µm, eingesetzt.

Vorzugsweise wird die Metallfolie einseitig beschichtet, d.h. mit der mit der Bedruckung versehenen Kunststofffolie kaschiert. Natürlich umfasst die Erfindung auch eine beidseitige Beschichtung mit einer entsprechenden Kunststofffolie, wobei hierbei in der Regel nur eine Kunststofffolie mit einer Bedruckung versehen ist, was jedoch nicht ausschließt, dass auch die andere Kunststofffolie mit einer Bedruckung versehen sein kann. Als Kunststofffolie findet beispielsweise eine PET-, PE- oder PP-Folie in einem Dickenbereich von 10-100 µm, vorzugsweise in einem Dickenbereich von 20-50 µm, Verwendung.

Die Konterbedruckung kann insbesondere zur Darstellung von individuellen Merkmalen, beispielsweise des Firmenlogos, EAN-Codes etc., benutzt werden. Die Farbgebung kann durch die Verwendung eines eingefärbten Kaschierklebers und/oder eine Vorlackierung/Primerung der Metallfolie unterstützt werden.

Zum Kaschieren kann ein üblicher Kaschierkleber verwendet werden, der sich durch gute Haftungseigenschaften auszeichnet und, falls erforderlich, lebensmittelrechtlich zugelassen ist. Der Kaschierkleber sollte insbesondere hydrolysestabil sein. Als Beispiel sei hierfür ein Zweikomponenten-Polyurethansystem genannt.

In Weiterbildung des erfindungsgemäßen Verfahrens findet eine Kunststofffolie mit einem Biozid-Zusatz Verwendung. Im Bereich der Pharmazie ist die Einhaltung von niedrigen Keimzahlen und damit die Reduzierung von pathogenen Mikroorganismen eine wichtige Voraussetzung für die Herstellung pharmazeutischer Verpackungen. Durch die entsprechenden Biozid-Zusätze erhält die Kunststofffolie eine antimikrobielle Oberfläche, um einen entsprechenden Schutz gegen Keime zu gewährleisten.

Vorzugsweise finden als Biozid-Zusatz nanoskalige Silberpartikel Verwendung, die in die Kunststofffolie eingemischt werden.

Eine weitere Verfahrensvariante besteht darin, dass die Außenseite der Kunststofffolie einer Fluoridierung unterzogen wird. Auch hierdurch lässt sich eine Reduzierung von Keimen erreichen.

Noch eine Verfahrensvariante zeichnet sich dadurch aus, dass in die Kunststofffolie Markierungsstoffe eingearbeitet werden. Bei solchen Markierungsstoffen kann es sich beispielsweise um UV-Leuchtpigmente handeln. Eine derartige Maßnahme kann zur Vermeidung von Fälschungen bzw. Produktpiraterie durchgeführt werden.

Bei einer zweiten Ausführungsform der Erfindung wird die vorstehend genannte Aufgabe durch ein Verfahren mit den Merkmalen von Patentanspruch 8 gelöst.

Auch auf diese Weise wird ein Basismaterial zur Formung von Bördelkappen zur Verfügung gestellt, das bereits mit einer Kennzeichnung versehen ist. Diese Kennzeichnung wird hierbei durch Bedruckung der Metallfolie vorgesehen. Auf die bedruckte Seite der Metallfolie wird eine Kunststoffschicht extrudiert. Auch hierbei kommt ein mehr oder weniger transparentes Material zur Anwendung, damit die Bedruckung von außen erkennbar ist.

Die Metallfolie wird vor der Bedruckung einer Vorbehandlung zur Haftungsverbesserung der Bedruckung unterzogen, wobei auch hier beispielsweise eine Korona-Vorbehandlung, eine Fluoridierung oder eine pyrolytische Vorbehandlung durchgeführt werden kann.

Im Übrigen gelten auch bei dieser Ausführungsform die vorstehend erwähnten Vorteile, Merkmale, Abmessungen, Materialien und Anwendungen.

Mit der Kunststoffschicht wird vorzugsweise ein Haftvermittler auf die bedruckte Seite der Metallfolie extrudiert, um eine gute Haftung der Kunststoffschicht auf der Metallfolie, vorzugsweise einer Aluminiumfolie, sicherzustellen.

Es kann eine mit einem Biozid-Zusatz versehene Kunststoffschicht aufextrudiert werden. Als Biozid-Zusatz können insbesondere nanoskalige Silberpartikel in die Kunststoffschicht eingemischt werden. Auch kann die Außenseite einer Fluoridierung unterzogen werden. Ferner können in die Kunststoffschicht Markierungen eingearbeitet werden.

Bei sämtlichen Verfahrensvarianten können auch in die eigentliche Bedruckung Markierungsstoffe eingearbeitet werden. Bei solchen Markierungsstoffen kann es sich beispielsweise um Spezialpigmente oder andere chemische Substanzen handeln. Die Einarbeitung von solchen Markierungsstoffen in die Bedruckung wird besonders bevorzugt, da durch die darüberliegende Kunststoffschicht ein entsprechender Schutz gegeben ist.

Wie erwähnt, ist die Kunststofffolie oder Kunststoffschicht mehr oder weniger transparent, damit die Bedruckung von außen erkennbar ist. Natürlich können auch opake oder beispielsweise leicht eingefärbte Kunststoffschichten bzw. -folien vorgesehen werden.

Auch bei der zuletzt beschriebenen Ausführungsform kann die Metallfolie beidseitig mit einer Kunststoffschicht versehen werden, wobei die Metallfolie auf der Seite der zweiten Kunststoffschicht in der Regel keine Bedruckung aufweist, eine solche jedoch aufweisen kann. Beide Schichten können jedoch mit einem Biozid versehen sein, was im Übrigen auch für die vorstehend geschilderte erste Verfahrensvariante gilt.

Ergänzend sei noch darauf hingewiesen, dass als Kaschierkleber vorzugsweise ein Bisphenol-A-freier Kaschierkleber eingesetzt wird.

Des Weiteren bezieht sich die Erfindung auf eine Bördelkappe für Behältnisse zur Aufnahme von pharmazeutischen Substanzen, insbesondere Ampullen, wobei die Bördelkappe dadurch gekennzeichnet ist, dass sie nach einem vorstehend beschriebenen Verfahren hergestellt ist. Eine derartige Bördelkappe wird zum Verschließen eines Behältnisses zur Aufnahme einer pharmazeutischen Substanz, insbesondere einer Ampulle, verwendet. Eine solche Ampulle besitzt eine Öffnung, in die zunächst ein Verschlussstopfen eingesetzt wird. Auf den Verschlussstopfen wird eine Bördelkappe aufgebracht. Die Bördelkappe kann eine Öffnung aufweisen, in der ein Deckelteil verankert wird. Dies ist bekannt.

Da die Kunststofffolie, die auf der Innenseite den Konterdruck trägt, mehr oder weniger transparent ist, ist die Bedruckung (Farbgebung, Musterung, Firmenlogo etc.) von außen sichtbar. Eine Handhabung der Bördelkappe bzw. des mit der Bördelkappe versehenen Behältnisses ist möglich, ohne dass die Gefahr einer Partikelabsonderung besteht.

Die Erfindung betrifft daher eine Bördelkappe, bei der das Basismaterial eine mit einer Kunststofffolie, die auf ihrer Innenseite eine Bedruckung aufweist, kaschierte Metallfolie umfasst. Des Weiteren ist die Erfindung auf eine Bördelkappe gerichtet, bei der das Basismaterial eine mit einer aufextrudierten Kunststoffschicht versehene bedruckte Metallfolie umfasst.

Ferner betrifft die Erfindung die Verwendung gemäß den Patentansprüchen 14 und 15.

Die Erfindung wird nachfolgend anhand von Ausführungsbeispielen in Verbindung mit der Zeichnung im Einzelnen erläutert. Es zeigen:
- Figur 1: eine räumliche Ansicht eines Stücks eines Basismateriales zur Formung von Bördelkappen;
- Figur 2: einen Vertikalschnitt durch das Basismaterial der Figur 1 entlang Linie A-A in Figur 1;
- Figur 3: eine entsprechende Schnittansicht wie bei Figur 2 einer anderen Ausführungsform eines Basismateriales;
- Figur 4: einen Vertikalschnitt durch einen Teil einer mit einer Bördelkappe versehenen Ampulle; und
- Figur 5: einen Vertikalschnitt in verschiedenen Herstellungsphasen eines durch ein anderes Verfahren hergestellten Basismateriales.

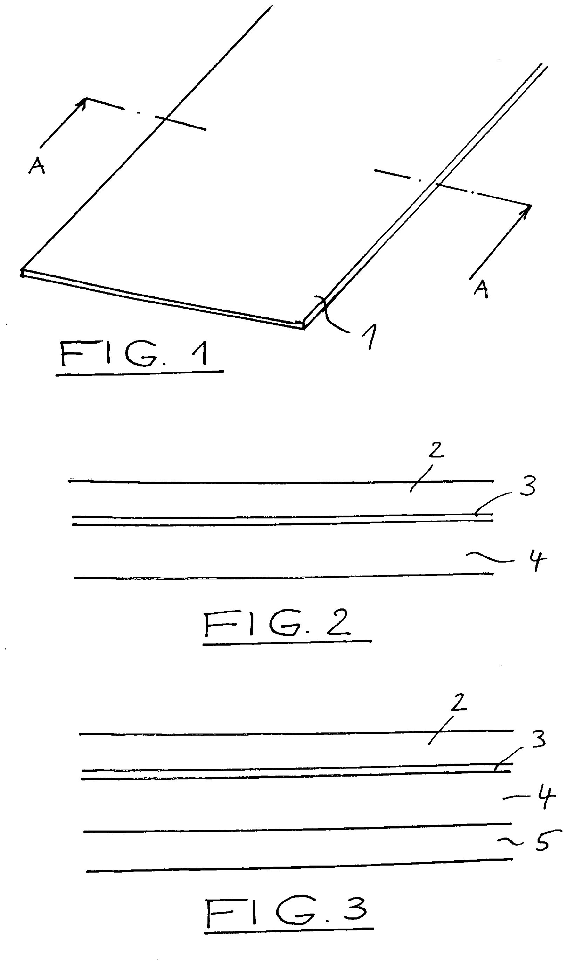

Figur 1 zeigt ein Stück eines Basismateriales zur Formung von Bördelkappen für Behältnisse zur Aufnahme von pharmazeutischen Substanzen, insbesondere Ampullen. Das Basismaterial 1 ist als Aluminiumband ausgebildet, das auf seiner Oberseite mit einer Kunststofffolie 2, hier Polyethylenfolie, beschichtet ist.

Figur 2 zeigt einen Vertikalschnitt durch das Basismaterial der Figur 1 entlang Linie A-A in Figur 1. Die Kunststofffolie 2 ist auf ihrer Unterseite mit einer Bedruckung 3 versehen und mit einem geeigneten Kaschierkleber mit der Aluminiumfolie 4 verbunden. Es handelt sich hierbei um eine transparente Kunststofffolie 2, so dass die Bedruckung von der Oberseite des Basismateriales erkennbar ist.

Bei der dargestellten Ausführungsform ist die Kunststofffolie 2 mit einem nanoskaligen Zusatz versehen, der in die Folie eingemischt ist. Als Beispiel hierfür sei Nanosilber genannt. Durch einen derartigen Zusatz wird das Material weitgehend keimfrei gemacht.

Des Weiteren sind in die Kunststofffolie 2 UV-Leuchtpigmente als Markierungsstoff eingebunden.

Figur 3 zeigt eine andere Ausführungsform eines Basismateriales. Bei dieser Ausführungsform ist die Aluminiumfolie 4 beidseitig mit einer Kunststoffschicht versehen, wobei die obere Kunststoffschicht 2 die erwähnte Bedruckung 3 aufweist, während die untere Kunststoffschicht 5 keine Bedruckung besitzt. Beide Kunststofffolien 2, 5 sind auf die Metallfolie aufkaschiert.

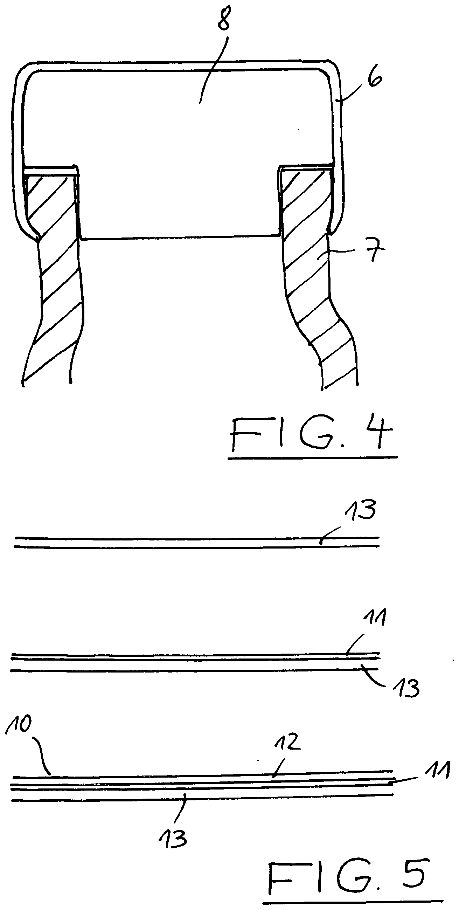

Figur 4 zeigt einen Vertikalschnitt durch den oberen Teil einer Ampulle 7. Aus dem vorstehend beschriebenen Basismaterial 1 wird durch Ausstanzen und Tiefziehen eine Bördelkappe 6 hergestellt, die zum Verschließen der Ampulle 7 benutzt wird. Die Ampulle 7 wird zuerst mit einem Verschlussstopfen 8 verschlossen, worauf die Bördelkappe 6 auf den Verschlussstopfen aufgebracht wird, um diesen auf der Ampulle zu sichern. Die aufgebrachte Bördelkappe 6 weist auf ihrer Außenseite die mit dem Biozid und dem Markierungsstoff versehende Kunststofffolie 2 auf, welche auf die Metallfolie 4 aufkaschiert ist und auf ihrer zur Metallfolie weisenden Seite mit einer Bedruckung 3 versehen ist, die beispielsweise das Firmenlogo des Arzneimittelherstellers enthalten kann.

Bei der Verfahrensvariante gemäß Figur 5 wird eine Aluminiumfolie 13 bereitgestellt. Die Folie 13 wird auf ihrer Oberseite mit einer Bedruckung 11 versehen, die beispielsweise irgendeine Kennzeichnung, Musterung, Farbgebung etc. enthalten kann. Auf die mit der Bedruckung 11 versehene Aluminiumfolie 13 werden ein Haftvermittler (nicht gezeigt) und eine Kunststoffschicht 12, beispielsweise eine Polyethylenschicht, extrudiert. Die entsprechenden Verfahrensschritte sind in Figur 5 übereinander dargestellt. Aus dem auf diese Weise hergestellten Basismaterial 10 wird durch Ausstanzen und Tiefziehen eine Bördelkappe gefertigt. schritte sind in Figur 5 übereinander dargestellt. Aus dem auf diese Weise hergestellten Basismaterial 10 wird durch Ausstanzen und Tiefziehen eine Bördelkappe gefertigt.

## Patentansprüche

1. Verfahren zur Herstellung einer Bördelkappe (6) für Behältnisse zur Aufnahme von pharmazeutischen Substanzen, insbesondere Ampullen, mit den folgenden Schritten:
Bereitstellen einer Metallfolie (4);
Bereitstellen einer Kunststofffolie (2);
Unterziehen der Kunststofffolie (2) einer Vorbehandlung zur Haftungsverbesserung für eine Bedruckung;
einseitiges Versehen der Kunststofffolie (2) mit der Bedruckung (3) ohne Durchführung einer Lackierung, um diese mit einer Kennzeichnung, wie einer Farbgebung, Musterung, individuellen Merkmalen etc., auszustatten; und
Kaschieren der Metallfolie (4) mit der bedruckten Kunststofffolie (2) derart, dass die mit der Bedruckung (3) versehene Folienseite als Konterdruck benachbart zur Metallfolie (4) angeordnet ist, zur Herstellung eines Basismateriales (1) für die Bördelkappe; und
Ausstanzen und Tiefziehen der Bördelkappe (6) aus dem Basismaterial (1), so dass diese eine seitlich offene Schnittkante aufweist.

2. Verfahren nach Anspruch 1, **dadurch gekennzeichnet, dass** die Kunststofffolie (2) als Vorbehandlung einer Korona-Behandlung unterzogen wird.

3. Verfahren nach einem der vorangehenden Ansprüche, **dadurch gekennzeichnet, dass** zum Kaschieren ein lebensmittelrechtlich zugelassener Kaschierkleber verwendet wird.

4. Verfahren nach einem der vorangehenden Ansprüche, **dadurch gekennzeichnet, dass** eine Kunststofffolie (2) mit einem Biozid-Zusatz verwendet wird.

5. Verfahren nach Anspruch 4, **dadurch gekennzeichnet, dass** als Biozid-Zusatz nanoskalige Silberpartikel in die Kunststofffolie (2) eingemischt werden.

6. Verfahren nach einem der vorangehenden Ansprüche, **dadurch gekennzeichnet, dass** die Außenseite der Kunststofffolie (2) einer Fluoridierung unterzogen wird.

7. Verfahren nach einem der vorangehenden Ansprüche, **dadurch gekennzeichnet, dass** in die Kunststofffolie (2) Markierungsstoffe eingearbeitet werden.

8. Verfahren zur Herstellung einer Bördelkappe für Behältnisse zur Aufnahme von pharmazeutischen Substanzen, insbesondere Ampullen, mit den folgenden Schritten:
Bereitstellen einer Metallfolie;
Unterziehen der Metallfolie einer Vorbehandlung zur Haftungsverbesserung für eine Bedruckung;
einseitiges Versehen der Metallfolie mit der Bedruckung ohne Durchführung einer Lackierung, um diese mit einer Kennzeichnung, wie einer Farbgebung, Musterung, individuellen Merkmalen etc., auszustatten; und
Aufextrudieren einer Kunststoffschicht auf die bedruckte Seite der Metallfolie zur Herstellung eines Basismateriales für die Bördelkappe; und
Ausstanzen und Tiefziehen der Bördelkappe aus dem Basismaterial, so dass diese eine seitlich offene Schnittkante aufweist.

9. Verfahren nach Anspruch 8, **dadurch gekennzeichnet, dass** mit der Kunststoffschicht ein Haftvermittler auf die bedruckte Seite der Metallfolie extrudiert wird.

10. Verfahren nach einem der vorangehenden Ansprüche, **dadurch gekennzeichnet, dass** in die Bedruckung Markierungsstoffe eingearbeitet werden.

11. Bördelkappe (6) für Behältnisse zur Aufnahme von pharmazeutischen Substanzen, insbesondere Ampullen, **dadurch gekennzeichnet, dass** sie nach einem Verfahren nach einem der Ansprüche 1 bis 10 hergestellt ist.

12. Bördelkappe (6) nach Anspruch 11, **dadurch gekennzeichnet, dass** das Basismaterial (1) eine mit einer Kunststofffolie (2), die auf ihrer Innenseite eine Bedruckung (3) aufweist, kaschierte Metallfolie (4) umfasst.

13. Bördelkappe nach Anspruch 11, **dadurch gekennzeichnet, dass** das Basismaterial (10) eine mit einer aufextrudierten Kunststoffschicht (12) versehene bedruckte Metallfolie (13) umfasst.

14. Verwendung eines durch die folgenden Schritte hergestellten Materiales:
Bereitstellen einer Metallfolie (4);
Bereitstellen einer Kunststofffolie (2);
Unterziehen der Kunststofffolie (2) einer Vorbehandlung zur Haftungsverbesserung für eine Bedruckung;
einseitiges Versehen der Kunststofffolie (2) mit der Bedruckung (3) ohne Durchführung einer Lackierung, um diese mit einer Kennzeichnung, wie einer Farbgebung, Musterung, individuellen Merkmalen etc., auszustatten; und
Kaschieren der Metallfolie (4) mit der bedruckten Kunststofffolie (2) derart, dass die mit der Bedruckung (3) versehene Folienseite als Konterdruck benachbart zur Metallfolie (4) angeordnet ist,
als Basismaterial (1) zur Formung von eine seitlich offene Schnittkante aufweisenden Bördelkappen (6) für Behältnisse zur Aufnahme von pharmazeutischen Substanzen, insbesondere Ampullen (7).

15. Verwendung eines durch die folgenden Schritte hergestellten Materiales:
Bereitstellen einer Metallfolie;
Unterziehen der Metallfolie einer Vorbehandlung zur Haftungsverbesserung für eine Bedruckung;
einseitiges Versehen der Metallfolie mit der Bedruckung ohne Durchführung einer Lackierung, um diese mit einer Kennzeichnung, wie einer Farbgebung, Musterung, individuellen Merkmalen etc., auszustatten; und
Aufextrudieren einer Kunststoffschicht auf die bedruckte Seite der Metallfolie
als Basismaterial zur Formung von eine seitlich offene Schnittkante aufweisenden Bördelkappen für Behältnisse zur Aufnahme von pharmazeutischen Substanzen, insbesondere Ampullen.

## Claims

1. A method for producing a flanged cap (6) for receptacles for taking up pharmaceutical substances, especially ampullas, comprising the following steps:
Providing a metal foil (4);
providing a plastic foil (2);
subjecting the plastic foil (2) to a pre-treatment for improving the adhesiveness for a print;
one-sided providing the plastic foil (2) with the print (3) without carrying out a varnishing in order to equip the same with an identification, as for instance a coloration, a pattern, individual features, etc.; and
laminating the metal foil (4) with the printed plastic foil (2) such that the foil side provided with the print (3) is arranged as counterprint adjacent to the metal foil (4) for the production of a base material (1) for the flanged cap; and
punching and deep-drawing of the flanged cap (6) from the base material (1) so that the same has a laterally open cutting edge.

2. The method according to claim 1, **characterised in that** the plastic foil (2) is subjected to a corona-treatment as pre-treatment.

3. The method according to one of the preceding claims, **characterised in that** a laminating adhesive admitted according to the food law is used for laminating.

4. The method according to one of the preceding claims, **characterised in that** a plastic foil (2) with a biocide additive is used.

5. The method according to claim 4, **characterised in that** nano-scaled silver particles are mixed into the plastic foil (2) as biocide additive.

6. The method according to one of the preceding claims, **characterised in that** the outside of the plastic foil (2) is subjected to a fluoridation.

7. The method according to one of the preceding claims, **characterised in that** marking substances are incorporated into the plastic foil (2).

8. A method for producing a flanged cap for receptacles for taking up pharmaceutical substances, especially ampullas, comprising the following steps:
Providing a metal foil;
subjecting the metal foil to a pre-treatment for improving the adhesiveness for a print;
one-sided providing the metal foil with the print without carrying out a varnishing in order to equip the same with an identification, as for instance a coloration, a pattern, individual features, etc.; and
extruding a plastic layer onto the printed side of the metal foil for producing a base material for the flanged cap; and
punching and deep-drawing the flanged cap from the base material so that the same has a laterally open cutting edge.

9. The method according to claim 8, **characterised in that** a bonding agent is extruded onto the printed side of the metal foil together with the plastic layer.

10. The method according to one of the preceding claims, **characterised in that** marking substances are incorporated into the print.

11. A flanged cap (6) for receptacles for taking up pharmaceutical substances, especially ampullas, **characterised in that** it is produced according to a method of one of claims 1 to 10.

12. The flanged cap (6) according to claim 11, **characterised in that** the base material (1) includes a metal foil (4) laminated with a plastic foil (2) having a print on its inner side.

13. The flanged cap according to claim 11, **characterised in that** the base material (10) includes a printed metal foil (13) provided with a plastic layer (12) extruded thereon.

14. The use of a material produced by the following steps:
Providing a metal foil (4);
providing a plastic foil (2);
subjecting the plastic foil (2) to a pre-treatment for improving the adhesiveness for a print;
one-sided providing the plastic foil (2) with a print (3) without carrying out a varnishing in order to equip the same with an identification, as for instance a coloration, a pattern, individual features, etc.; and
laminating the metal foil (4) with a printed plastic foil (2) such that the foil side provided with the print (3) is arranged as counterprint adjacent to the metal foil (4),
as base material (1) for forming flanged caps (6) having a laterally open cutting edge for receptacles for taking up pharmaceutical substances, especially ampullas (7).

15. The use of a material produced by the following steps:
Providing a metal foil;
subjecting the metal foil to a pre-treatment for improving the adhesiveness for a print;
one-sided providing the metal foil (2) with a print (3) without carrying out a varnishing in order to equip the same with an identification, as for instance a coloration, a pattern, individual features, etc.; and
extruding a plastic layer onto the printed side of the metal foil,
as base material for forming flanged caps having a laterally open cutting edge for receptacles for taking up pharmaceutical substances, especially ampullas.

## Revendications

1. Procédé de fabrication d'un capuchon à collerette (6) pour récipients pour la réception de substances pharmaceutiques, en particulier ampoules, avec les étapes suivantes :
mise à disposition d'un film métallique (4) ;
mise à disposition d'un film plastique (2) ;
soumission du film plastique (2) à un traitement préalable pour l'amélioration de l'adhérence pour une impression ;
dotation unilatérale du film plastique (2) de l'impression (3) sans réalisation d'un laquage, pour l'équiper d'un marquage, tel qu'une coloration, un dessin, des caractéristiques individuelles, etc. ; et
contrecollage du film métallique (4) avec le film plastique imprimé (2) de sorte que le côté film doté de l'impression (3) est agencé en tant que contre-pression de manière adjacente au film métallique (4), pour la fabrication d'un matériau de base (1) pour le capuchon à collerette ; et
découpe et emboutissage du capuchon à collerette (6) dans le matériau de base (1), de sorte que celui-ci présente une arête de coupe ouverte sur le côté.

2. Procédé selon la revendication 1, **caractérisé en ce que** le film plastique (2) est soumis à un traitement corona en tant que traitement préalable.

3. Procédé selon l'une quelconque des revendications précédentes, **caractérisé en ce qu'**une colle de contrecollage autorisée par la législation sur les denrées alimentaires est utilisée pour le contrecollage.

4. Procédé selon l'une quelconque des revendications précédentes, **caractérisé en ce qu'**un film plastique (2) avec un ajout de biocide est utilisé.

5. Procédé selon la revendication 4, **caractérisé en ce que** des particules d'argent à nanoéchelle sont mélangées dans le film plastique (2) en tant qu'ajout de biocide.

6. Procédé selon l'une quelconque des revendications précédentes, **caractérisé en ce que** le côté extérieur du film plastique (2) est soumis à une fluoration.

7. Procédé selon l'une quelconque des revendications précédentes, **caractérisé en ce que** des substances de marquage sont intégrées dans le film plastique (2).

8. Procédé de fabrication d'un capuchon à collerette pour récipients pour la réception de substances pharmaceutiques, en particulier ampoules, avec les étapes suivantes :
mise à disposition d'un film métallique ;
soumission du film métallique à un traitement préalable pour l'amélioration de l'adhérence pour une impression ;
dotation unilatérale du film métallique de l'impression sans réalisation d'un laquage, pour l'équiper d'un marquage, tel qu'une coloration, un dessin, des caractéristiques individuelles, etc. ; et
extrusion d'une couche plastique sur le côté imprimé du film métallique pour la fabrication d'un matériau de base pour le capuchon à collerette ; et
découpe et emboutissage du capuchon à collerette dans le matériau de base, de sorte que celui-ci présente une arête de coupe ouverte sur le côté.

9. Procédé selon la revendication 8, **caractérisé en ce qu'**un adhésif est extrudé sur le côté imprimé du film métallique avec la couche plastique.

10. Procédé selon l'une quelconque des revendications précédentes, **caractérisé en ce que** des substances de marquage sont intégrées dans l'impression.

11. Capuchon à collerette (6) pour récipients pour la réception de substances pharmaceutiques, en particulier ampoules, **caractérisé en ce qu'**il est fabriqué selon un procédé selon l'une quelconque des revendications 1 à 10.

12. Capuchon à collerette (6) selon la revendication 11, **caractérisé en ce que** le matériau de base (1) présente un film métallique (4) contrecollé avec un film plastique (2), qui présente une impression (3) sur son côté intérieur.

13. Capuchon à collerette selon la revendication 11, **caractérisé en ce que** le matériau de base (10) comprend un film métallique imprimé (13) doté d'une couche plastique (12) extrudée dessus.

14. Utilisation d'un matériau fabriqué par les étapes suivantes :
mise à disposition d'un film métallique (4) ;
mise à disposition d'un film plastique (2) ;
soumission du film plastique (2) à un traitement préalable pour l'amélioration de l'adhérence pour une impression ;
dotation unilatérale du film plastique (2) de l'impression (3) sans réalisation d'un laquage, pour l'équiper d'un marquage, tel qu'une coloration, un dessin, des caractéristiques individuelles, etc. ; et
contrecollage du film métallique (4) avec le film plastique imprimé (2) de sorte que le côté film doté de l'impression (3) est agencé en tant que contre-pression de manière adjacente au film métallique (4),
en tant que matériau de base (1) pour la formation de capuchons à collerette (6) présentant une arête de coupe ouverte sur le côté pour des récipients pour la réception de substances pharmaceutiques, en particulier des ampoules (7).

15. Utilisation d'un matériau fabriqué par les étapes suivantes :
mise à disposition d'un film métallique ;
soumission du film métallique à un traitement préalable pour l'amélioration de l'adhérence pour une impression ;
dotation unilatérale du film métallique de l'impression sans réalisation d'un laquage, pour l'équiper d'un marquage, tel qu'une coloration, un dessin, des caractéristiques individuelles, etc. ; et
extrusion d'une couche plastique sur le côté imprimé du film métallique
en tant que matériau de base pour la formation de capuchons à collerette présentant une arête de coupe ouverte sur le côté pour des récipients pour la réception de substances pharmaceutiques, en particulier des ampoules.
